# EUROPEAN PATENT APPLICATION

(11) **EP 1 529 868 A2**
(43) Date of publication of application: **11.05.2005**
(21) Application number: 04026162.0
(22) Date of filing: 04.11.2004
(51) Int. Cl.: D06F 37/20, D06F 23/06

(54) **Drum type washing machine**

(30) Priority: 07.11.2003 JP 2003378123
(71) Applicant: MATSUSHITA ELECTRIC INDUSTRIAL CO., LTD., Kadoma-shi, Osaka 571-8501 (JP)
(72) Inventor: Inuzuka, Tadashi, Kawabe-gun Hyogo 666-0257 (JP); Saito, Katsuya, Kawanishi-shi Hyogo 666-0125 (JP); Fukuda, Tsuyoshi, Toyonaka-shi Osaka 561-0831 (JP)
(74) Representative: Turi, Michael, Dipl.-Phys.

(57) **Abstract**

A drum type washing machine (1) includes a housing, a water tub unit (5) in the housing (6), at least one vibration damper (70) fixed at a base portion of the housing (6) and at least one of first biasing member (71) and second biasing member (72). The vibration damper (70) supports the water tub unit (5) at a first position closer to a front side of housing (6) than a center of gravity of the water tub unit (5) is. The first biasing member (71) elastically biases the water tub unit (5) toward at least the front side of the housing at a second position higher than the first position. The second biasing member (72) elastically biases the water tub unit (5) towards at least a rear side of the housing (6) at a third position lower than the first position.

## Description

The present invention relates to a drum type washing machine for performing washing, rinsing and water-extracting processes by rotating a rotary drum accommodating laundry therein.

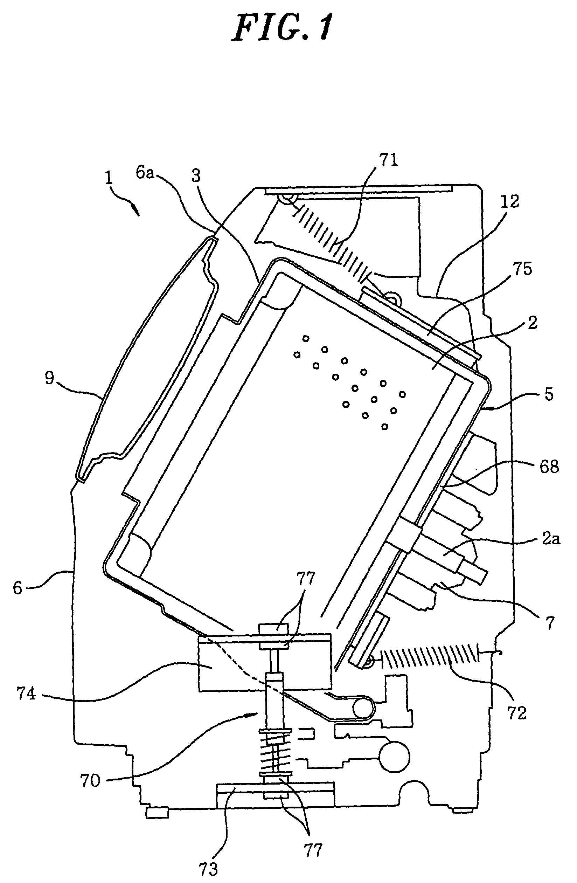

With regard to a drum type washing machine, a rotary drum is disposed in a water tub such that its rotational axis is horizontally oriented or slanted with respect to the horizontal direction, and thus laundry and water in the rotary drum tend to gather in the lower portion of the drum. Accordingly, when the rotary drum is rotated after loading laundry therein, the rotary drum tends to vibrate. Particularly, if laundry is unbalanced toward one portion of the rotary drum during a water-extracting process in which the rotary drum is rotated at a high speed, the water tub accommodating the rotary drum therein would vibrate considerably. In order to eliminate the vibration generated by rotating the rotary drum, one approach has been suggested to support the water tub with a vibration damper having a high shock absorbing capacity, thereby reducing the amplitude of vibration (see Japanese Patent Laid-Open Application No. 1994-327892, pp. 2 to 4, Fig. 1).

In the rear portion of the water tub accommodating the rotary drum therein, since a bearing for holding in place a rotating shaft of the rotary drum, a drum driving motor, and so forth are disposed, the center of gravity is biased towards the rear portion of the washing machine. To support the water tub constructed in such manner, the vibration damper can be disposed below the center of gravity. However, the water tub is very unstable since the water tub which accommodates therein the rotary drum in which laundry and water move around is supported at a non-equilibrium position with respect to the center of gravity. Accordingly, a balancing weight is disposed in the front portion of the water tub to balance the front weight with the rear weight, and the vibration damper is disposed below the center of the water tub. Further, the upper portion of the water tub is elastically biased upwardly by multiple tensioned spring members in order to maintain a balance of the water tub whose center of gravity is continuously shifted throughout the rotation of the rotary drum.

In the above-described conventional structure, numerous components are necessary in order to maintain the balance of the water tub and absorb the vibration thereof. In particular, among the components, the balancing weight and the like are considerably heavy. As a result, the gross weight of the drum type washing machine becomes significantly large. Therefore, transporting such a drum type washing machine would require a high degree of labor, which would then increase the overall cost of such a washing machine.

It is, therefore, an object of the present invention to provide a drum type washing machine having a supporting structure capable of not only maintaining the balance of a water tub accommodating a rotary drum therein but also effectively eliminating the vibration of the water tub without causing an increase in the weight of the water tub.

In accordance with a first preferred embodiment of the present invention, there is provided a drum type washing machine including: a housing; a water tub unit accommodated in the housing, the water tub unit having: a cylindrical water tub having a bottom; a cylindrical rotary drum having a bottom, and being accommodated in the cylindrical water tub; a rotating shaft fixed at a center of a lower surface of the bottom of the cylindrical rotary drum; a bearing for supporting the rotating shaft, the bearing being fixed to a lower surface of the bottom of the cylindrical water tub; and a drum driving motor coupled to the rotating shaft; at least one vibration damper, a lower portion of said at least one vibration damper being fixed at a base portion of the housing; and a biasing member, wherein said at least one vibration damper supports the water tub unit at a first position, the first position being located closer to a front side of the housing than a center of gravity of the water tub unit is, and the biasing member elastically biases the water tub unit toward at least the front side of the housing at a second position higher than the first position.

In the above configuration, the water tub unit accommodating the rotary drum therein is supported by the vibration damper which is disposed below the water tub unit such that its position is located closer to the front side of the housing than the center of gravity of the water tub unit is. Therefore, the weight of the water tub unit is supported by the vibration damper while suppressing the vibration of the water tub unit at the same time. Further, since the water tub unit is supported at the position located closer to the front side of the housing than the center of gravity is, the water tub unit tends to fall back toward the rear side of the washing machine. Such tendency, however, is offset by the biasing member, which elastically biases the upper portion of the water tub unit toward the front of the housing. Therefore, the water tub unit can be maintained in a predetermined position in the housing of the washing machine while suppressing the vibration of the upper portion of the water tub unit, thereby realizing a reduction of vibration level.

In accordance with a second preferred embodiment of the present invention, there is provided a drum type washing machine including: a housing; a water tub unit accommodated in the housing, the water tub unit having: a cylindrical water tub having a bottom; a cylindrical rotary drum having a bottom, and being accommodated in the cylindrical water tub; a rotating shaft fixed at a center of a lower surface of the bottom of the cylindrical rotary drum; a bearing for supporting the rotating shaft, the bearing being fixed to a lower surface of the bottom of the cylindrical water tub; and a drum driving motor coupled to the rotating shaft; at least one vibration damper, a lower portion of said at least one vibration damper being fixed at a base portion of the housing; and a biasing member, wherein said at least one vibration damper supports the water tub unit at a first position, the first position being located closer to a front side of the housing than a center of gravity of the water tub unit is, and the biasing member elastically biases the water tub unit toward at least a rear side of the housing at a second position lower than the first position.

In the above configuration, the water tub unit's tendency to fall back toward the rear side of the housing is suppressed by the biasing member. Therefore, the water tub unit can be maintained in the predetermined position in the housing of the washing machine while suppressing the vibration of the lower portion of the water tub unit, thereby realizing a reduction of vibration level.

In accordance with a third preferred embodiment of the present invention, there is provided a drum type washing machine including: a housing; a water tub unit accommodated in the housing, the water tub unit having: a cylindrical water tub having a bottom; a cylindrical rotary drum having a bottom, and being accommodated in the cylindrical water tub; a rotating shaft fixed at a center of a lower surface of the bottom of the cylindrical rotary drum; a bearing for supporting the rotating shaft, the bearing being fixed to a lower surface of the bottom of the cylindrical water tub; and a drum driving motor coupled to the rotating shaft; at least one vibration damper, a lower portion of said at least one vibration damper being fixed at a base portion of the housing; and a first biasing member; and a second biasing member, wherein said at least one vibration damper supports the water tub unit at a first position, the first position being located closer to a front side of the housing than a center of gravity of the water tub unit is, the first biasing member elastically biases the water tub unit toward at least the front side of the housing at a second position higher than the first position and the second biasing member elastically biases the water tub unit toward at least a rear side of the housing at a third position lower than the first position.

In the above configuration, the water tub unit accommodating the rotary drum therein is supported by the vibration damper that is located below the water tub unit such that its position is located closer to the front side of the housing than the center of gravity of the water tub unit is. Therefore, the weight of the water tub unit is supported by the vibration damper while suppressing the vibration of the water tub unit. Further, since the water tub unit is supported at the first position located closer to the front side of the housing than the center of gravity is, the water tub unit tends to fall back toward the rear side of the washing machine. Such tendency, however, is offset by the first biasing member which elastically biases the upper portion of the water tub unit towards the front side of the housing and, also by the second biasing member which elastically biases the water tub unit to at least the rear side of the housing at the third position lower than the first position where the water tub is supported by the vibration damper. Therefore, the water tub unit can be maintained in a predetermined position in the housing of the washing machine while suppressing the vibration of the upper and the lower portion of the water tub unit, thereby realizing a reduction of vibration.

In the first to the third preferred embodiments of the present invention, the water tub unit is disposed in the housing such that a front side of the rotating shaft of the rotary drum is located higher than a rear side thereof. In such a case, it is possible to elastically maintain the water tub unit more effectively in a predetermined position, thereby realizing a reduction of vibration.

In accordance with the present invention, the water tub unit whose center of gravity lies near the rear side can be supported in the housing of the washing machine while its balance is well maintained. Further, it is possible to construct a vibration dampening structure for effectively suppressing the vibration of the water tub unit by using an elastic support.

The above and other objects and features of the present invention will become apparent from the following description of the preferred embodiments given in conjunction with the accompanying drawings, in which:
Fig. 1 is a cross sectional view showing a supporting structure of a drum type washing machine in accordance with a preferred embodiment of the present invention;
Fig. 2 presents a front view of the supporting structure; and
Fig. 3 shows a front view showing the configuration of a vibration damper used in the supporting structure.

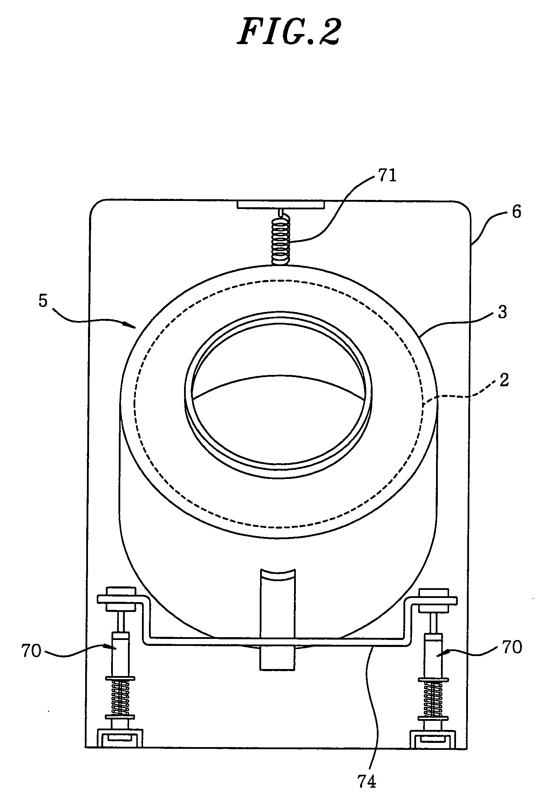

Figs. 1 and 2 show a supporting structure for supporting water tub unit 5 in drum type washing machine 1 in accordance with a preferred embodiment of the present invention. Water tub unit 5 includes rotary drum 2, water tub 3 accommodating rotary drum 2 therein, rotating shaft 2a connected to the rotary drum 2 such that bearing 68 holds in place rotary drum 2's rotating shaft 2a. The bearing 68 is mounted on a lower surface of a bottom of water tub 3, and drum driving motor 7 is connected to rotating shaft 2a. Water tub unit 5 is slantingly disposed in housing 6 of washing machine 1 with its front portion raised, and the weight of water tub unit 5 is supported by a pair of left and right vibration dampers 70 installed at the base portion of housing 6. Since water tub unit 5 has heavy components, such as bearing 68 and drum driving motor 7 near a lower surface of a bottom thereof, the center of gravity of water tub unit 5 lies near the lower surface of the bottom of water tub unit 5, and vibration dampers 70 for supporting water tub unit 5 are disposed below water tub unit 5 such that their locations are located closer to the front side of housing 6 than the center of gravity of water tub unit 5. Further, first coil spring (first biasing member) 71 is installed between upper supporting metallic part 75 fixed on the upper portion of water tub 3 and the top side of housing 6 so that water tub unit 5 is elastically biased toward the top front portion of housing 6. First coil spring 71 prevents water tub unit 5, which is supported by vibration dampers 70 disposed at a position located closer to the front side of housing 6 than the center of gravity of water tub unit 5 and toward the front side of housing 6, from falling back toward the rear side of housing 6. Further, in addition to first coil spring 71, second coil spring (second biasing member) 72 is installed between the rear side of housing 6 and the lower rear surface of water tub unit 5, wherein the installation point of second coil spring 72 on the lower rear surface of water tub unit 5 is at a lower level than the supporting position in the water tub unit 5 by vibration dampers 70. By means of second coil spring 72, the tendency of water tub unit 5 to fall back toward the rear side can be more securely prevented.

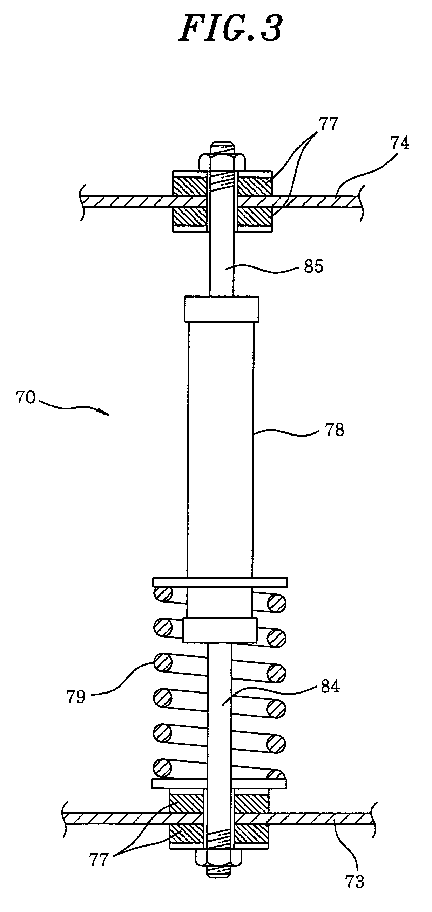

As shown in Fig. 3, each of vibration dampers 70 includes oil damping device 78 and coil spring device 79, wherein the two elements are coaxially disposed and oil damping device 78 is fabricated by filling a cylinder with oil and sealing it. Further, coil spring device 79 is installed at the lower portion of oil damping device 78 such that it can extend and compress. As for the piston rod 84, around which coil spring device 79 is disposed, its free end is fixed on supporting table 73 via buffering material 77. Further, while one end of supporting shaft 85, which is a part of oil damping device 78, is fixed at the top portion of oil damping device 78, the other end of supporting shaft 85 is fixed at the lower supporting metallic part 74 via buffering material 77.

Rotary drum 2 is slantingly disposed such that its rotational axis is declined from the front side corresponding to its opening, and toward the rear side corresponding to its base portion. Therefore, a user only needs to bend his/her waist slightly to load and unload laundry after opening door 9 installed at inclined surface 6a formed on the front side of housing 6. Further, since it is no longer necessary to secure too much clearance space in front of washing machine 1, it can be installed in a small space of a bathroom or the like.

In the above configuration, water tub unit 5 is maintained in a predetermined position in the manner as follows: the weight of water tub unit 5 is supported by vibration dampers 70; the tendency of water tub unit 5 to fall back due to its supporting position ahead of the center of gravity is offset elastically by first coil spring 71 while second coil spring 72 supplements to this supporting. Further, since water tub unit 5 is elastically supported by vibration dampers 70 and first and second coil springs 71 and 72 respectively, the vibration of the upper and the lower portion of water tub unit 5 accompanying the rotation of rotary drum 2 can be suppressed, and, at the same time, suppressing the transmission of the vibration to housing 6 of washing machine 1 as well.

In drum type washing machine 1 having aforementioned construction, by starting an operation after loading laundry into rotary drum 2 by opening door 9 installed at the front portion of housing 6, water fills water tub 3 from water supply unit 12 up to a predetermined water level corresponding to the laundry amount. Thereafter, rotary drum 2 is driven to rotate by drum driving motor 7, thereby executing washing, rinsing and water-extracting processes in order.

In accordance with the present invention discussed heretofore, by supporting the weight of the water tub accommodating the rotary drum therein at a position away from its center of gravity by means of the vibration dampers, and by elastically biasing the water tub at another position, the water tub unit is maintained in a predetermined position. Therefore, a vibration caused by the rotation of the rotary drum can be effectively prevented from being transmitted to the housing of the main body. In particular, the present invention can be applied to a drum type washing machine, which has a water tub unit slantingly disposed to make easier loading and unloading of laundry.

While the invention has been shown and described with respect to the preferred embodiment, it will be understood by those skilled in the art that various changes and modifications may be made without departing from the scope of the invention as defined in the following claims.

## Claims

1. A drum type washing machine comprising:
a housing;
a water tub unit accommodated in the housing, the water tub unit including:
a cylindrical water tub having a bottom;
a cylindrical rotary drum having a bottom, and being accommodated in the cylindrical water tub;
a rotating shaft fixed at a center of a lower surface of the bottom of the cylindrical rotary drum;
a bearing for supporting the rotating shaft, the bearing being fixed to a lower surface of the bottom of the cylindrical water tub; and
a drum driving motor coupled to the rotating shaft;
at least one vibration damper, a lower portion of said at least one vibration damper being fixed at a base portion of the housing; and
a biasing member,
wherein said at least one vibration damper supports the water tub unit at a first position, the first position being located closer to a front side of the housing than a center of gravity of the water tub unit is, and the biasing member elastically biases the water tub unit toward at least the front side of the housing at a second position higher than the first position.

2. A drum type washing machine comprising:
a housing;
a water tub unit accommodated in the housing, the water tub unit including:
a cylindrical water tub having a bottom;
a cylindrical rotary drum having a bottom, and being accommodated in the cylindrical water tub;
a rotating shaft fixed at a center of a lower surface of the bottom of the cylindrical rotary drum;
a bearing for supporting the rotating shaft, the bearing being fixed to a lower surface of the bottom of the cylindrical water tub; and
a drum driving motor coupled to the rotating shaft;
at least one vibration damper, a lower portion of said at least one vibration damper being fixed at a base portion of the housing; and
a biasing member,
wherein said at least one vibration damper supports the water tub unit at a first position, the first position being located closer to a front side of the housing than a center of gravity of the water tub unit is, and the biasing member elastically biases the water tub unit toward at least a rear side of the housing at a second position lower than the first position.

3. A drum type washing machine comprising:
a housing;
a water tub unit accommodated in the housing, the water tub unit including:
a cylindrical water tub having a bottom;
a cylindrical rotary drum having a bottom, and being accommodated in the cylindrical water tub;
a rotating shaft fixed at a center of a lower surface of the bottom of the cylindrical rotary drum;
a bearing for supporting the rotating shaft, the bearing being fixed to a lower surface of the bottom of the cylindrical water tub; and
a drum driving motor coupled to the rotating shaft;
at least one vibration damper, a lower portion of said at least one vibration damper being fixed at a base portion of the housing; and
a first biasing member; and
a second biasing member,
wherein said at least one vibration damper supports the water tub unit at a first position, the first position being located closer to a front side of the housing than a center of gravity of the water tub unit is, the first biasing member elastically biases the water tub unit toward at least the front side of the housing at a second position higher than the first position and the second biasing member elastically biases the water tub unit toward at least a rear side of the housing at a third position lower than the first position.

4. The washing machine of any one of claims 1 to 3, wherein the water tub unit is disposed in the housing such that a front side of the rotating shaft of the rotary drum is located higher than a rear side thereof.
